# EUROPEAN PATENT SPECIFICATION

(11) **EP 3 759 451 B1**
(45) Date of publication and mention of the grant of the patent: **07.06.2023**
(21) Application number: 19707021.2
(22) Date of filing: 01.03.2019
(51) Int. Cl.: G01L 19/00, G01L 13/06, G01L 15/00, G01L 19/06, G01L 19/14

(54) **PRESSURE SENSOR**
DRUCKSENSOR
CAPTEUR DE PRESSION

(30) Priority: 02.03.2018 EP 18159640; 02.03.2018 EP 18159638
(43) Date of publication of application: 06.01.2021
(73) Proprietor: Grundfos Holding A/S, 8850 Bjerringbro (DK)
(72) Inventor: SCHØN, Jan, 7430 Ikast (DK); BRORSON OTTE, Thorsten, 8830 Tjele (DK); KJELDSEN, Søren, 8830 Tjele (DK)
(74) Representative: Patentanwälte Vollmann Hemmer Lindfeld Partnerschaft mbB
(86) International application number: PCT/EP2019/055095
(87) International publication number: WO 2019/166605

(56) References cited:
- EP-A1- 1 870 687
- EP-A1- 3 251 787
- WO-A1-2018/114109
- ES-U- 1 072 442
- JP-U- S57 203 343
- US-A1- 2010 018 319

## Description

The invention relates to a pressure sensor with a sensor housing.

Such pressure sensors can be installed into different machines, in particular into pump assemblies such as centrifugal pump assemblies, for pressure detection. There, they can particularly preferably be designed as differential pressure sensors, in order to detect the differential pressure between the inlet and outlet of the pump. Such a pressure sensor in its inside must comprise channels, in order to lead the pressures which are to be measured up to the actual measuring element. This measuring element, for example a deformable membrane with deformation measuring elements and/or strain gauge elements is preferably arranged on a circuit board in the inside of the sensor housing. Other measuring principles such as for example piezoelectric measuring principles can also be applied.

If such a pressure sensor is inserted into a machine such as a pump assembly, it is desirable for the pressure sensor to compromise the flow in the inside of the machine as little as possible. Inasmuch as this is concerned, particularly concerning parts of the pressure sensor which project into the flow paths of the machine, an as smooth as possible, flow-optimised outer shaping is desirable. However, complex channel structures possibly need to be simultaneously formed in the inside.

WO 2018/114109 A1 discloses to build a sensor housing on a metal plate, wherein the sensor housing is manufactured by an additive manufacturing method on said metal plate.

ES 1 072 442 U discloses a comb instrumentation for measuring pressure and/or temperature of fluids. The instrument consists of a wingshaped body with tubes extending to the outside. This body is placed on a base element including connections for fluid channels inside the body. At least the body may be produced by sintering.

EP 1 870 687 A1 discloses an integrated device as a fluid sensor, wherein fluid channels towards the sensing elements are provided inside a housing which is produced by several layers of photoresist material, inside which the channels are formed by etching.

JP S57203343 U discloses a sensor element having channels into which further elements for shock absorption are inserted.

US 2010/0018319 A1 discloses an apparatus for eliminating varying pressure fluctuations in a pressure transducer. This apparatus comprises elastic or coil-shaped fluid channels.

It is the object of the invention to provide a pressure sensor which is inexpensive to manufacture, but despite this permits the formation of complex structures in its inside. It is moreover the object of the invention to provide a method for forming such a pressure sensor.

This object is achieved by a pressure sensor with the features specified in claim 1, as well as by a method with the features specified in claim 16. Preferred embodiments are to be deduced from the associated dependent claims, the subsequent description as well as the attached drawings.

The pressure sensor according to the invention comprises a sensor housing, in which in particular the necessary electrical or electronic components, in particular the actual measuring elements are arranged. According to the invention, the sensor housing comprises at least one sensor body which is formed from two sections. Herein, the sensor body is preferably that element, in which the pressure sensing opening or the pressure sensing openings are situated, through which opening or openings a fluid whose pressure is to be detected can get into the inside of the sensor housing. In particular, the sensor body can be the part of the pressure sensor which is provided for insertion into an assembly or a machine, such as for example a pump assembly.

Of the two sections of the at least one sensor body, a first section is designed as a premanufactured element. This is an element which has been manufactured e.g. in a conventional manner, such as a primary shaping process and/or in a material-removing manufacturing process, in a first manufacturing step. The second section is integrally formed onto this first section in a single part manner in a generative manufacturing method (3D printing), i.e. has been directly printed onto this first section after the manufacture of this. This inventive hybrid construction of the sensor housing or of its at least one sensor body has the advantage that the first section can be inexpensively manufactured in a conventional manner. In particular, this is a section which has no complex structures in its inside and is manufactured by way of conventional moulding methods and/or material-removing manufacturing methods. Furthermore, the outer contour of this first section can be machined in a simple manner for rendering it streamline, for example by way of grinding or polishing, in order to minimise the flow losses when this sensor body protrudes into the flow channel for pressure measurement. In contrast, the second section which is joined directly onto the first section in an additive or generative method permits the formation of very complex structures, in particular channels, in its inside. I.e. that part of the sensor body which requires such complex structures is manufactured generatively, which indeed permits the formation of angled inner structures which are provided with undercuts. The generative manufacturing method allows to arrange

complex channel structures in a small place, thereby reducing the overall size of the sensor. Furthermore, the manufacturing time of the sensor body can be minimised due to the fact that only that section which comprises such structures is manufactured in the generative manufacturing method.

Both sections of the sensor body, i.e. the first and the second section of the sensor body each comprise at least a section of a fluid channel which is connected to a pressure measuring element. This means that in each section of the sensor body there is provided at least one section of the pressure channel leading towards the pressure sensing element used to transfer the pressure to be measured from a pressure sensing opening to the pressure sensing element. In the premanufactured element forming the first section of the sensor body such fluid channel may be constituted for example by a conventional machining like drilling. Such a method in particular allows to produce a very smooth and straight channel section. In an alternative embodiment a conventional tube or a section of a tube may be used as a first section of the sensor body. This allows to produce the parts of the sensor body having a less complex shape of the fluid channel, in particular a straight design of the fluid channel, by use of conventional methods, in particular conventional machining like drilling. This allows a very cost-effective production of the first section of the sensor body.

In a preferred embodiment of the invention the pressure sensor according to the invention is designed as a differential pressure sensor for detecting a pressure difference. The differential pressure sensor has two pressure sensing openings and a pressure measuring element which is arranged for detecting the pressure difference between these two pressure sensing openings. The pressure sensing openings may be connected to the pressure measuring element by at least one fluid channel inside the sensor body.

Particularly preferably, the first and the second section of the sensor body are manufactured of metal, further preferably of stainless steel. The first section can be formed for example from round steel in a material-removing manner, whereas the second section is then integrally formed on this first section in a generative method. However, it is also possible prior to this to likewise form the first section in a primary shaping manufacturing method, for example in the moulding/casting method or likewise in a generative manner, wherein a further machining such as e.g. a material-removing machining can be effected before attaching second section. Instead of manufacturing the first and the second section of metal, a manufacture for example from plastic would also be possible.

The first and the second section of the sensor body are preferably welded to one another by way of the generative manufacturing procedure or printing procedure. I.e. the heat which is required on melting the material to be deposited is preferably utilised, in order to simultaneously weld the first layers of the second section directly onto the first section. The connection can therefore be realised directly in the printing process, which permits a quick and inexpensive manufacture.

As described above, the sensor body according to a preferred embodiment is designed for inserting into a space, in whose inside a pressure is to be detected. The sensor body can therefore be designed as a measuring finger which is inserted through an opening into the inside of a flow-leading component, in particular into the inside of a pump assembly.

The sensor body can moreover preferably comprise fastening elements such as for example a thread, with which it can be screwed into the opening of a flow-leading component such as of a pump assembly. In particular, such a thread can be formed in particular on the second section, particularly preferably in a direct manner in a generative manufacturing method. Further preferably, the sensor housing and in particular the at least one sensor body comprises a sealing surface, on which a seal can come to bear for sealing.

Further preferably, the first section preferably extends away from the second section and a channel section of a first fluid channel extends through the first section. This channel section is further preferably open towards an end which is away from the second section. The first section thus in its inside comprises a first fluid channel which preferably extends into the second section of the sensor body. I.e. a channel section which is formed by generative manufacture, in the second section of the sensor body connects onto a channel section which has previously been formed in the first section of the sensor body, for example in a material-removing manner.

According to a further preferred embodiment, the mentioned channel section of the first fluid channel likewise extends through the second section of the sensor body. The channel section of the first fluid channel can therefore extend through the second sensor body, for example to a measuring element which is arranged in the inside of the sensor housing.

According to a further preferred embodiment of the invention, a second fluid channel which at a first end runs out into a pressure sensing opening is formed in the second section of the sensor body. This pressure sensing opening is further preferably distanced from the opening of the first fluid channel in the first section of the sensor body. The openings or pressure receiving openings of the first and of the second fluid channel therefore serve for recording or sensing pressures at two positions which are distanced to one another, in order to therefore permit a differential pressure measurement by way of one measuring element in the inside of the sensor housing, to which element the fluid channels lead. For example, the sensor body can be inserted into a pump assembly such that a pressure sensing opening lies at the delivery side or outlet side of the pump assembly, whilst the other pressure sensing opening lies at the inlet or suction side of the pump assembly.

The second fluid channel particularly preferably comprises an angled or meandering course and/or has at least one cross-sectional change. The second fluid channel can therefore have a complex shape which can be optimised with regard to different aspects. The fluid channel can therefore be optimised such that pressure waves or pressure impulses in the fluid channel are damped, in order to prevent damage to a measuring element which connects onto the fluid channel. A shaping can also be optimised to the extent that cavitation in the region of a measuring element is reduced by way of vacuum impulses in the conduit being minimised. This is particularly the case when the fluid channel creates a connection for example to a suction side of a pump assembly. The design or formation by way of a generative manufacturing method permits arbitrarily complex shapes of the fluid channel, for example multiply angled courses, cross-sectional widenings or narrowings or annular channels, so that compensation volumes or damping volumes can be created in the inside of the fluid channel, in order to damp or minimise pressure fluctuations for the protection of a measuring element.

The second fluid channel with a second end preferably ends in the second section of the sensor body at a measuring element receiver, on which a measuring element, for example in the form of a membrane bears. Herein, a seal can preferably be provided on the measuring element receiver, said seal sealing the transition between the measuring element and the measuring element receiver to the outside. The design of the measuring element receiver in the second section of the sensor body which is manufactured generatively has the advantage that the measuring element receiver can thus also be simply co-formed in a direct manner in the printing process.

According to a further preferred embodiment, the channel section of the first fluid channel ends in the second section of the sensor body either at a measuring element receiver, on which a measuring element bears, or at an interface, at which a second channel section in a further housing part is connected to the first fluid channel in the sensor body. A measuring element receiver can be designed in the same manner as was described above by way of the second fluid channel. I.e., here a membrane of a measuring element can be brought into sealing contact, for example amid the use of an intermediate seal. The design of an interface permits a further housing part to be joined on at this location, preferably likewise amid the intermediate arrangement of a seal, through which further housing part the fluid channel is led further via a second channel section. This for example can be a housing part, in which the fluid channel is led onto the rear side of a measuring element, said measuring element bearing on a measuring element receiver of the second fluid channel, in order to permit a differential pressure measurement between the pressures in the two mentioned fluid channels.

The second channel section of the first fluid channel is thus further preferably formed in a housing body which is connected to the sensor. This for example can be a housing body which together with the sensor body forms the sensor housing and in particular in its inside defines a receiving space, in which the necessary electrical or electronic components, for example a circuit board with one or more measuring elements can be positioned. However, a special housing body can also be provided merely for the mentioned fluid channel.

The first fluid channel preferably ends at a measuring element receiver, on which a measuring element bears. This can be a measuring element receiver with a measuring element as has been described beforehand.

The measuring element receiver, at which the first fluid channel ends, according to a further preferred embodiment preferably lies in the housing body which is connected to the sensor body, as has been described beforehand. Further preferably, this housing body can likewise be formed in a generative manufacturing method (3D-printing), so that a complex design of the channel course in the inside of the housing body and the formation of a connecting measuring element receiver can also be realised in a simple manner.

According to a particularly preferred embodiment of the invention, the measuring element receiver of the first fluid channel, i.e. at which the first fluid channel ends, lies opposite the measuring element receiver of the second fluid channel, i.e. opposite the measuring element receiver, at which the second fluid channel ends, wherein a differential pressure measuring element is situated at the two measuring element receivers. I.e. the differential pressure measuring element preferably lies between the two measuring element receivers which lie opposite one another and in particular is preferably clamped or tensioned between these. The differential pressure measuring element can therefore be subjected to pressure from two sides which are away from one another, in order to determine the differential pressure between the two measuring element receivers. The differential pressure measuring element can be for example a membrane, whose deflection is detected.

According to one embodiment of the invention, one envisages the first fluid channel, departing from a first side of the circuit board, extending through an opening in the circuit board to a second side of the circuit board and being connected to the measuring element at this second side of the circuit board. This design has the advantage that the measuring element which is to detect the pressure in the fluid channel, does not necessarily need to be situated at that side of the circuit board, departing from which the fluid channel extends to the pressure sensing opening. In contrast, the fluid channel can thus extend through the circuit board to its rear side, at which the measuring element is then arranged. This can permit a very compact construction of the pressure sensor.

Herein, the first fluid channel preferably extends through the opening in a direction transverse and in particular normal to a surface of the circuit board. The fluid channel can therefore extend away from the circuit board to a pressure sensing opening, for example in the manner of a sensor or measuring finger, wherein this measuring finger can be inserted into a recess in the housing of a facility or a machine, in which facility or machine the pressure is to be determined. Herein, a pressure sensing opening then lies at one end of the measuring finger, whereas the circuit board preferably lies at the opposite end and there can extend transversely to the extension direction of the first fluid channel, so that a pressure sensor with an as short as possible axial construction length can be created.

According to a further preferred embodiment of the invention, the circuit board annularly surrounds the opening. Herein, the circuit board can form a closed ring around the opening. However, it is also conceivable for the circuit board to extend around the opening in the manner of an open ring. Herein, the circuit board preferably extends around the opening by at least 270 degrees. The construction space which surrounds the opening can be utilised for electronic or electrical components on the circuit board due to the annular arrangement of the circuit board around the opening. The opening is preferably situated centrally in the circuit board which according to a preferred embodiment has a round outer contour.

According to a further preferred embodiment of the invention, the first fluid channel comprises a deflecting element at the second side of the circuit board, in which deflecting element the extension direction of the fluid channel changes and preferably changes by 180 degrees. I.e., the fluid channel is deflected at the second side such that it can end at a measuring element, preferably from the second side of the circuit board. The measuring element can therefore be subjected to pressure, even if its measuring surface is away from a first side of the circuit board, departing from which first side the fluid channel extends to the circuit board and through this to the second side. The deflection in the deflecting element is preferably effected by 180 degrees, i.e. in a U-shaped manner, wherein the measuring element is arranged laterally, i.e. in the direction of the surface of the circuit board next to the opening.

The first fluid channel can therefore comprise a deflecting element at the second side of the circuit board, in which deflecting element the extension direction of the fluid channel changes twice by 90 degree, wherein a channel section which extends parallel to the surface of the circuit board is preferably present between the two deflections. A lateral displacement of the measuring element to the opening, through which the fluid channel extends can be realised by way of this.

According to a further possible embodiment of the invention, the first fluid channel can comprise at least one first channel section which is situated at the first side of the circuit board, i.e. is situated essentially at the first side of the circuit board, and at least one second channel section which is situated at the second side of the circuit board, i.e. essentially at the second side of the circuit board. If the first channel section is situated essentially at the first side of the circuit board, then this means that preferably the largest part of the channel section is situated at this side of the circuit board. This correspondingly applies to the second channel section. The first and the second channel section are preferably connected to one another via a sealed interface, wherein this sealed interface is preferably situated in the region of the opening in the circuit board. This two-part design of the fluid channel permits a simple assembly, since the circuit board can thus be arranged between two components which each accommodate one of the channel sections and sealingly engage into one another in the region of the opening.

Further preferably, a second channel section of the first fluid channel which is situated at the second side of the circuit board is formed in a housing body which is part of an electronics housing which accommodates the circuit board. This housing body, possibly with further housing parts can therefore encompass a receiving space, in which the circuit board is arranged. Herein, the housing body is preferably designed such that it extends parallel to the circuit board to the extent that the circuit board is completely covered by the housing body at its second side. The housing body can therefore function as a cover of an electronics housing. However, it is also possible for the housing body to be arranged in the inside of the electronics housing and to be covered for example by an additional cover. In this case, the housing body can also merely serve for example for accommodating the fluid channel.

Further preferably, at least that part of the housing body, in which the second channel section is situated, is designed as one piece. The channel section can therefore be formed directly in the inside of a solid housing body, which is particularly advantageous. This for example is possible by way of the housing body being designed as a moulded component or also as a component which is generated in a generative manufacturing method (3D printing). A channel section with a complex course, for example with the deflections which are described above, and without interfaces which are to be sealed, can also be simply formed in this manner.

According to a further embodiment of the invention, the measuring element can be a differential pressure element with two measuring surfaces which are away from one another. The measuring element can therefore for example be a membrane which is subjected to pressure from both sides, wherein the differential pressure between the two sides can be determined via the deflection of the membrane. The deflection can be detected for example by way of strain gauge elements which are arranged on the membrane, or piezoelectric elements. However, it is also possible to apply two measuring elements which act independently of one another, for determining the differential pressure. A first measuring surface preferably faces the first side of the circuit board and a second measuring surface faces the second side of the circuit board. Due to the described extension of the first fluid channel through the circuit board, a pressure to be detected can therefore be brought onto the second measuring surface at the second side of the circuit board, i.e. the rear side of the circuit board, whereas the other pressure at the first side of the circuit board acts upon the first measuring surface which is situated there. The differential pressure can therefore be determined in a simple manner and the measuring element can be reliably contacted on the circuit board. The circuit board preferably comprises a hole in the region of the measuring element, so that here too, a pressure channel can extend through the circuit board and a measuring element which is arranged on one side of the circuit board can be subjected to pressure from two sides.

The first fluid channel preferably ends at the second measuring surface of the measuring element which is away from the second side of the circuit board. This can be achieved by way of the aforementioned deflection in the fluid channel at the second side of the circuit board.

Furthermore, a second fluid channel is preferably present in the pressure sensor, said second fluid channel ending at the first measuring surface of the measuring element, i.e. the measuring surface which faces in the direction of the first side of the circuit board. This second fluid channel, preferably departing from the first side of the circuit board, extends to a pressure sensing opening which is preferably situated distanced to a pressure sensing opening of the first fluid channel. Both pressure sensing openings can be situated for example in a measuring finger in a distanced manner, wherein the measuring finger extends in or through two measuring spaces, in which the two pressures are to be sensed.

The second fluid channel and at least a first channel section of the first fluid channel are therefore preferably arranged in a common sensor body which is preferably designed of one part. This simplifies the construction and permits a very compact construction of the pressure sensor. The fluid channels can be formed in the sensor body in different manners. Thus for example it is possible to form one or both fluid channels on manufacture of the sensor body, for example in a moulding method or in a generative manufacturing method. It is alternatively possible to incorporate one or both fluid channels or only sections of the fluid channels into the sensor body at a later stage by way of machining the sensor body, for example by way of material-removing machining or also thermal machining, e.g. by way of laser beam. The formation of the fluid channels or of the channel sections of the fluid channels in a single-part and in particular single-piece sensor body has the advantage that few as possible interfaces which are to be sealed arise.

The circuit board is preferably situated between a housing body of the electronics housing and the sensor body. The housing body of the electronics housing, as described above, can herein be a housing part of the electronic housing which terminates this to be outside, or however a housing body which is situated in the inside of the electronics housing and forms one or more fluid channels or channel sections of fluid channels there. The housing body and the sensor body are preferably shaped such that when they are put together, they enclose a receiving space, in which the circuit board is arranged. Herein, the circuit board is preferably fixed between the housing body and the sensor body. Further preferably, measuring element receivers which are formed in the sensor body and/or the housing body and at which the described fluid channels end, on assembly come into sealing contact with the measuring elements or with sealing surfaces which surround the measuring elements. The necessary seals are therefore preferably also brought into contact by way of the fixation of the circuit board between the housing body and the sensor body.

Apart from the previously described pressure sensor, the subject-matter of the invention in particular is also a pump assembly with such a pressure sensor as has been mentioned above. Herein, the pressure sensor is preferably arranged in at least one flow path of the pump assembly for pressure measurement. Particularly preferably, the pump assembly can be a centrifugal pump assembly. According to a preferred embodiment, the pressure sensor can be a differential pressure sensor which determines the pressure difference between the suction side and the delivery side of the pump assembly.

According to a preferred embodiment, the pressure sensor is designed such that the sensor body forms a measuring finger which is inserted through a hole into the inside of the pump casing. Herein, the sensor body can preferably be fixed in the pump casing by way of a threaded connection or another suitable connection such as for example a bayonet connection. The sensor body preferably comprises two pressure sensing opening as have been described above, wherein these are distanced to one another such that the one pressure sensing opening is situated in a suction-side flow path and the other pressure sensing opening is situated in a delivery-side flow path of the pump assembly, in order to be able to determine the differential pressure between the two.

The subject-matter of the invention is further a method for manufacturing a pressure sensor, preferably a pressure sensor as has been described beforehand. The preceding description is also referred to with regard to the preferred method features. Previously described method steps are simultaneously preferred embodiments of the method according to the invention, wherein these method steps can be realised independently or in combination with one another.

According to the method according to the invention, a first section of a sensor body is firstly provided as a premanufactured component. In a second method step, a second section of the sensor body is subsequently generated directly on the first section by way of a generative manufacturing method, wherein a connection of the second to the first section occurs. Preferably, at least one fluid channel, further preferably at least two fluid channels are formed in the second section by way of the generative method. Herein, a fluid channel is preferably formed, said fluid channel connecting onto the section of a fluid channel in the first fluid channel, so that a continuous fluid channel is created.

The first section which forms a premanufactured component is preferably manufactured in a primary shaping and/or material-removing manufacturing process. The manufacturing time can be shortened due to the fact that only the second section is manufactured by way of an additive or generative manufacturing method (3D printing), since it is not the complete component which needs to be manufactured in a time-consuming printing process. In contrast, only that section of the sensor body which comprises complex structures which would either be difficult or impossible to form in another manner are manufactured generatively. A permanent material connection between both sections can be created without a further assembly procedure due to the fact that the second section is printed directly onto the first section. Selective laser sintering can be applied for example as a generative manufacturing method.

The invention is hereinafter described by way of the example and by way of the attached figures. In these are shown in:
- Fig. 1: a sectioned view of a multi-stage centrifugal pump assembly according to the invention,
- Fig. 2: a sectioned view of a base and foot casing of a multi-staged centrifugal pump assembly with a pressure sensor which is arranged therein,
- Fig. 3: a perspective exploded view of a pressure sensor according to the invention,
- Fig. 4: a perspective exploded view of the pressure sensor according to Fig. 3 with a view onto the electronics housing,
- Fig. 5A: a partly transparent view of a housing body of the pressure sensor according to Fig. 3 and 4,
- Fig. 5B: a sectioned view of the housing body according to Fig. 5A,
- Fig. 6: a sectioned view of the pressure sensor according to Fig. 3 and 4,
- Fig. 7: a first alternative embodiment example for fluid channels in a pressure sensor,
- Fig. 8: a second alternative embodiment example for an arrangement of fluid channels in a pressure sensor,
- Fig. 9: a third alternative embodiment example for the arrangement of fluid channels in a pressure sensor,
- Fig. 10: a fourth alternative embodiment example for the arrangement of fluid channels in a pressure sensor,
- Fig. 11: a sectioned view of a further embodiment example of a fluid channel in a pressure sensor according to the invention and
- Fig. 12: a schematic sectioned view of a further embodiment example of a fluid channel in a pressure sensor according to the invention.

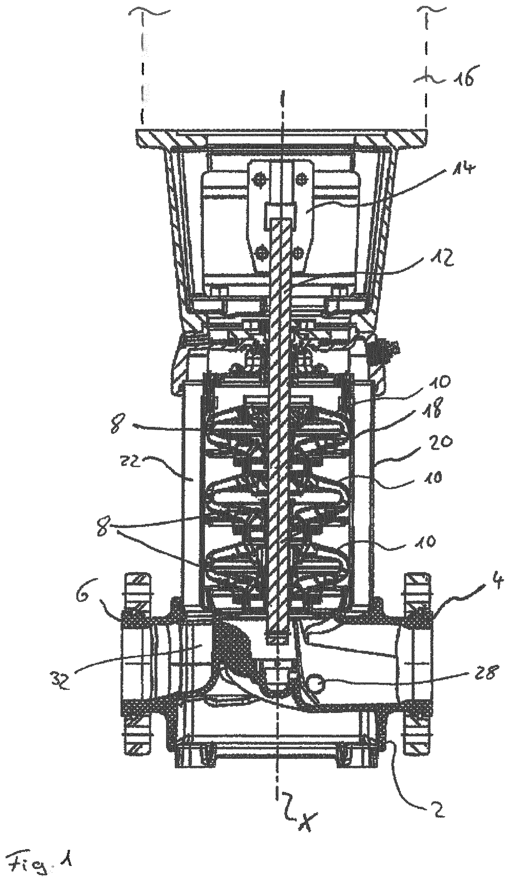

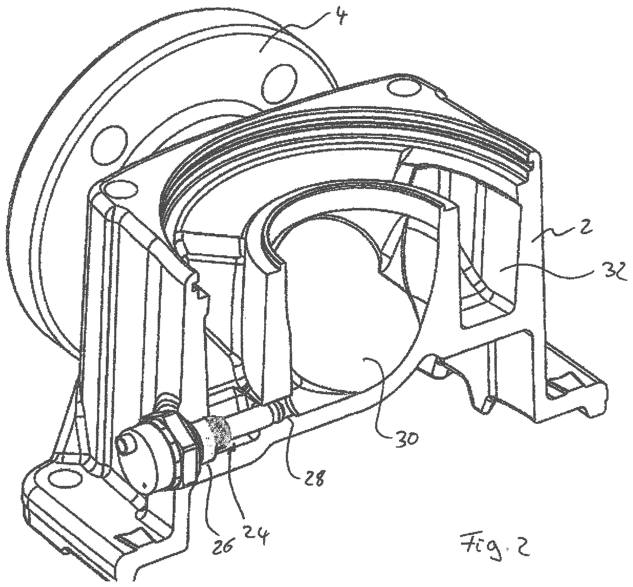

In a sectioned view, Fig. 1 shows a multi-stage centrifugal pump assembly as an example for a pump assembly according to the invention, in which a pressure sensor according to the invention is applied. The shown pump assembly comprises a foot casing or base casing 2, on which an inlet branch (nozzle or stub) 4 and an outlet branch 6 are formed. In this embodiment example, three pump stages which are each formed from an impeller 8 and intermediately lying diffusers 10 are attached onto the base casing 2. The impellers 8 are arranged on a common shaft 12 which is connected to a drive motor 16 which here is only shown schematically, via a coupling 14. The individual pump stages are situated in an inner tubular casing 18 which is surrounded at a distance by an outer casing 20 which is likewise designed in a tubular manner. An annular channel 22 which serves as a delivery channel and connects the outlet side of the pump stages to the outlet or delivery branch 6 in the base casing 2 is therefore formed between the casings 18 and 20. As is shown in Fig. 2, a pressure sensor 24 is arranged in the base casing 2. The pressure sensor 24 is inserted through an opening 26 in the outer casing wall of the base casing 2. Lying opposite this opening 26, the pressure sensor 24 projects into an opening 28 in a wall of the suction channel 30 which is formed in the inside of the basis housing 2. The pressure sensor 24 therefore extends through an annular space 32. The annular space 32 connects onto the annular channel 22 in the base casing 2 and creates the connection to the delivery branch 6. The pressure sensor 24 can detect the delivery-side pressure in the annular space 32 as well as the suction-side pressure in the suction channel 30 and thus the differential pressure between the inlet side and the outlet side of the pump assembly, due to the arrangement of the pressure sensor 24 in such a manner.

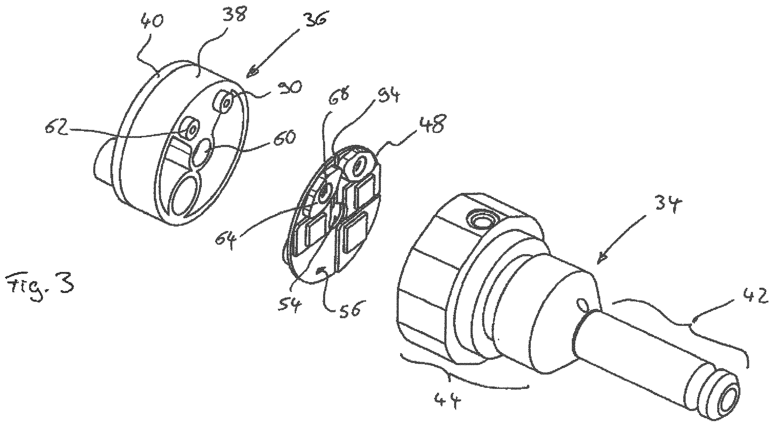

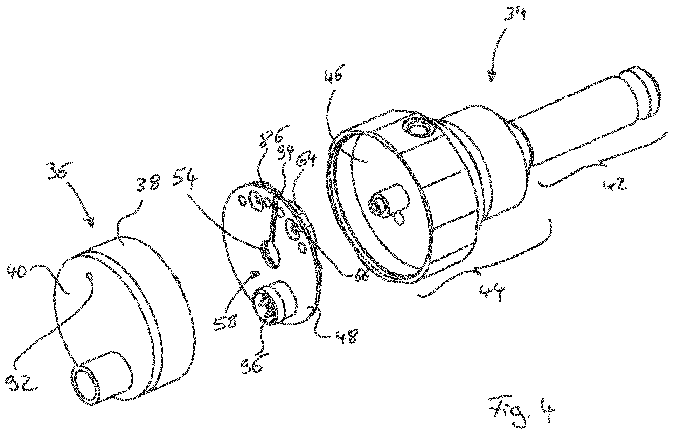

The construction of the pressure sensor is described in more detail by way of Fig. 3 to 5. The pressure sensor 24 consists of a sensor body 34 and an electronics housing 36. The electronics housing 36 comprises a housing body 38 and a cover 40 which closes this. The sensor body 34 and the electronics housing 36 together form a sensor housing which contains all essential components of the pressure sensor.

The sensor body 34 is formed from two sections 42 and 44. The first section 42 of the sensor body forms a sensor finger which, as is shown in Fig. 2, extends through the annular space 32 into the opening 28. The connecting second section 44 of the sensor body is adjacent to the electronics housing 36. The second section 44 together with the housing body 38 encloses a receiving space 46, in which a circuit board 48 with the actual measuring electronics of the pressure sensor is arranged.

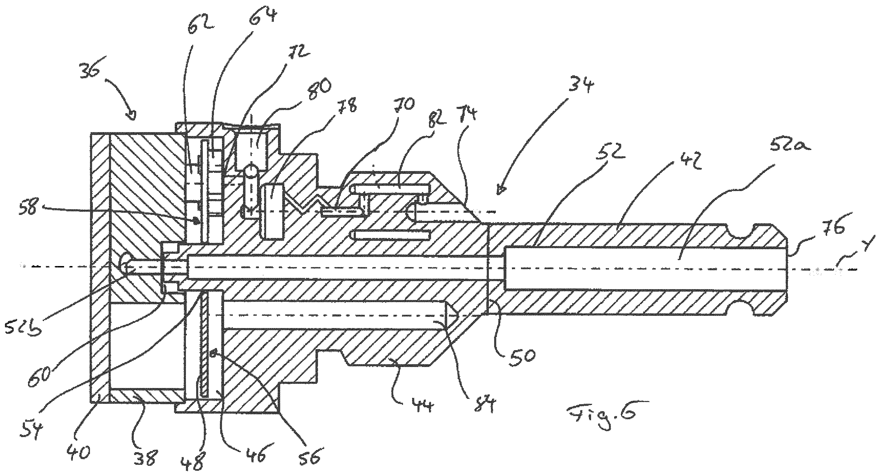

The first section of the sensor body 42 and the second section of the sensor body 44 are connected to one another in a connection plane 50 which is represented in Fig. 6. Herein, concerning the pressure sensor which is shown here, the first section 42 is firstly provided as a premanufactured component, for example as a component which is manufactured from round steel in a material-removing manner, in the manufacturing process. In contrast, the second section 44 is formed onto the premanufactured component which forms the first section 42, in a generative or additive manufacturing method, which is to say by way of so-called 3D printing. This means that the second section 44 has been generated directly on the first section 42 which is premanufactured, in an additive manner. Herein, a welding of both components takes place at the connection plane 50, so that these are formed in a single-part manner as a result. In the shown example, both parts are manufactured of the same material, preferably rust-free stainless steel.

A first fluid channel 52 runs through the complete sensor body 34 in the longitudinal direction Y of this body. Herein, the first fluid channel 52 comprises a first channel section 52a and a second channel section 52b. The first channel section 52a extends in the sensor body 34. An extension of this channel section which is likewise part of the first fluid channel 52 extends as a second channel section 52b in the housing body 38. The first fluid channel 52 can be formed in the first section 42 of the sensor body 34 for example with a drilling method. The first fluid channel 52 is formed in the generatively manufactured structure in a direct manner in the second section of the sensor body 44.

The circuit board 48 in its centre comprises an opening 54 in the form of a central hole. This serves for the first fluid channel 52 being able to extend through the circuit board 48. Herein, the first section 52a of the fluid channel 52 is situated essentially, which is to say for its greater part, at a first distal end 56 of the circuit board 48. The first side 56 faces the free or distal end of the sensor body 34, whereas the opposite second side 58 of the circuit board 52 faces the housing body 38. A sealed interface 60, at which the first channel section 52a is connected to the second channel section 52b is formed between the sensor body 34 and the housing body 38.

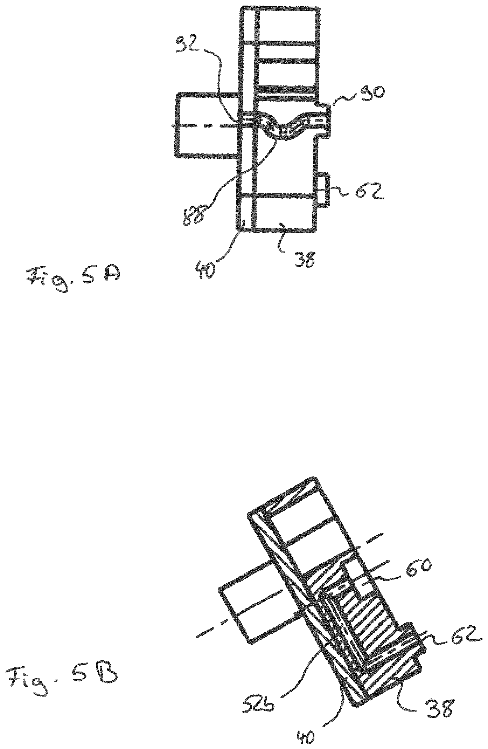

As is shown in section in Fig. 5B, the second channel section 52b, departing from the interface 60, extends in the housing body 38 in a manner angled twice by 90° in a U-shaped course to a measuring element receiver 62. The measuring element receiver 62 is situated radially offset to the interface 60 which is arranged centrally. The housing body 38 with the channel section 52b is preferably likewise manufactured in a generative or additive manufacturing method in particular of metal such as for example rust-free stainless steel.

The measuring element receiver 62 comes to bear on a first measuring element 64. The measuring element 64 is arranged on the circuit board 48, wherein the circuit board 48 comprises an opening, through which the measuring element receiver 62 comes to bear on the measuring element 64 which is arranged on the first side 56 of the circuit board. The channel section 52b of the fluid channel 52 therefore ends at a second measuring surface 66 of the measuring element 64. The measuring element 64 is a differential pressure measuring element. A second fluid channel 70 which is likewise formed in the sensor body 34 is situated on the first measuring surface 68 which is situated at the first side 56 of the circuit board 48. The second fluid channel 70 connects a measuring element receiver 72 which lies opposite the first measuring surface 68 of the measuring element 64, to a pressure sensing opening 74. The pressure sensing opening 74 is situated distanced to the distal end of the sensor body 34 in the region of the second section 44. In the axial direction Y, the pressure sensing opening 74 is therefore distanced to the pressure sensing opening 76 which is situated at the distal end and at which the first fluid channel 52 runs out. When it is inserted into the base casing 2 as is shown in Fig. 2, the pressure sensor 24 can therefore detect the pressure in the suction channel 30 at the distal end via the pressure sensing opening 76. The pressure sensing opening 74 is simultaneously open to the annular space 32, in order to detect the outlet pressure of the pump assembly.

The second fluid channel 70 in the second section 44 of the sensor body 43 comprises a complex, multi-angled and, resulting from this, meandering course. Reflection surfaces which reflect pressure waves are created by the sectionally angled and zigzag-shaped course. A pressure wave which enters into the pressure sensing opening 74 cannot therefore reach the measuring surface 68 on the measuring element 64 in an unhindered manner. In contrast, a damping takes place, said damping protecting the measuring element 64 from damage. Furthermore, a cross-sectional widening in the form of a cylindrical expansion space 78 which likewise serves for damping for the reduction of cavitation given occurring vacuums is provided in the course of the fluid channel 70. In the embodiment example which is shown here, furthermore yet a flushing (purging) connection 80 which in particular is provided for the venting and can possibly be closed in operation branches from the second fluid channel 70. Apart from the expansion space 78, the second fluid channel 70 yet comprises an annular expansion space 82 which can likewise serve for damping occurring pressure fluctuations and for avoiding cavitation. The contour of the second fluid channel 70, second fluid channel in this embodiment example being assigned to the delivery side of the pump assembly, in its course and its contour can be very flexibly adapted for the second section 44 by way of the selected generative manufacturing method, since complicated geometries can be formed without further ado. The first fluid channel 52 could also be provided with direction changes and/or cross-sectional changes in this manner.

As a generative manufacturing method, the selective laser sintering or a similar method can likewise be applied. Additionally to the mentioned fluid channels, in this example a free space 84 is formed in the second section 44 of the sensor body 34, in order to save material and to shorten the manufacturing time. The manufacturing time is likewise shortened by way of the described hybrid construction with the premanufactured first section 42, since this can be conventionally premanufactured. However, it is alternatively conceivable to also manufacture the first section 42 in a generative manufacturing method and for example to post-machine it, for example to grind or polish it on the outer periphery, before the attachment of the second section 44, in order to minimise the flow resistance in the annular space 32.

If the housing body 38 is attached onto the sensor body 34, then the measuring element receivers 62 and 72 lie opposite one another such that the measuring element 64 is clamped between them in a sealing manner and can therefore be subjected to pressure from both sides for the differential pressure measurement. A second measuring element 86 which is envisaged for detecting the ambient pressure is also arranged on the circuit board 48. For this, a third fluid channel 88 is formed in the housing body 38, as is shown in Fig. 5A. The fluid channel 88, departing from a measuring element receiver 90, extends to an opening 92 in the cover 40. The third fluid channel 88 herein runs in an arched manner, so that it is not possible to insert a straight object through the opening 92 and through the complete third fluid channel 88 up to the measuring element receiver 90. The measuring element 86 is protected from damage by way of this. The third fluid channel 88 brings the ambient pressure to the measuring element 86. For this, the measuring element receiver 90 which engages through an opening in the circuit board 48 bears on a measuring surface of the measuring element 86. The measuring element 86 is likewise arranged at the first side of the circuit board 48. The circuit board 48 comprises a recess in the form of a radially extending slot 94, in order to achieve a force decoupling between the measuring elements 64 and 86. This slot extends from the outer periphery in the radial direction up to the opening 54. The slot 94 permits a certain deformability of the circuit board 48. Apart from the described measuring elements 64 and 86, the circuit board 48 carries further electronic components for measured value detection and for evaluation, and creates the connection to a connection plug 96 of the pressure sensor.

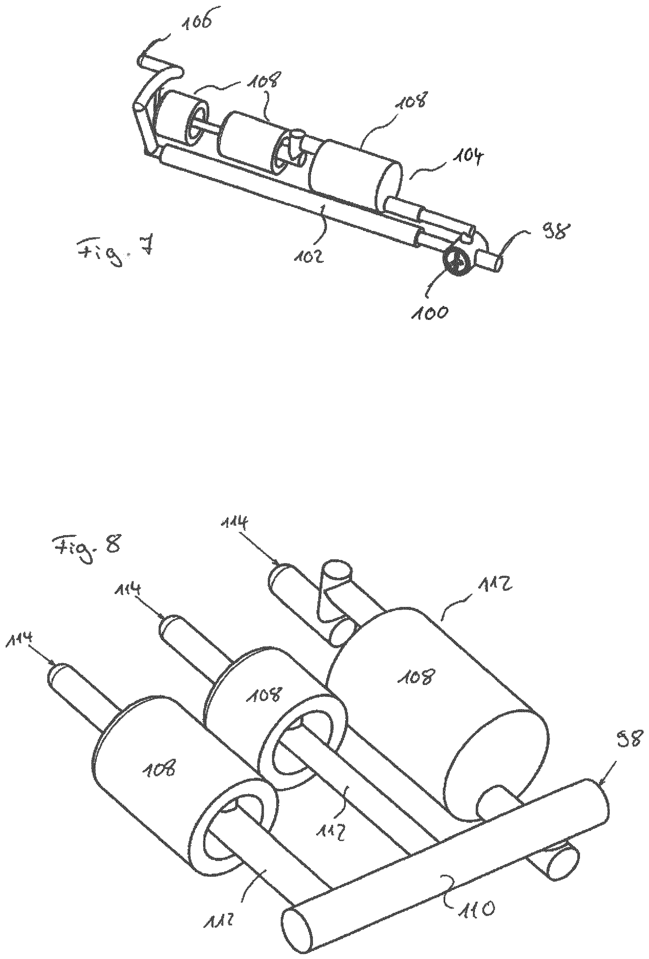

A described, the generative manufacture of the structure, in which the fluid channels are formed, permits different courses or geometries of the fluid channels, in order to achieve different damping characteristics. Further possible geometries for such fluid channels in a pressure sensor are described by way of Fig. 7 to 11.

Concerning the embodiment example according to Fig. 7, there is a pressure sensing opening 98, departing from which a fluid channel runs to a valve device 100, via which the connection can be selectively switched to a fluid channel 102 or a fluid channel 104. The valve device 100 can likewise be co-formed in the generatively manufactured structure, wherein preferably the movable valve element is also co-formed in an integral manner. The fluid channel 102 runs in a relatively direct manner with three bendings to a first measuring element receiver 106. The second fluid channel 104 has a more complex geometry with three expansion spaces 108 and several bendings. The fluid channel 104 runs out again into the other fluid channel 102 in front of the measuring element receiver 106. The fluid channel 102 or the fluid channel 104 can be selectively used for connection to the measuring element receiver 106 by way of switching-over the valve device 100. The sensor can therefore be adapted to different applications cases.

A further possible embodiment is shown in Fig. 8. A pressure sensing opening 98, onto which a common channel section 110 connects is likewise provided there. Three channel sections 112 branch away from this common channel section 110, to three measuring element receivers 114. The three channel sections 112 comprise different geometries with different bendings and differently shaped expansion spaces. With this embodiment example, all three measuring element receivers 114 are permanently in connection with the pressure sensing opening 98 via the three channel sections 112. Such a sensor can be adapted to different application purposes by way of one of three measuring elements which bear on the measuring element receivers 114 being selectively activated and the other two for example not being used. A purely electronic adaptation to different application possibilities can be achieved by this.

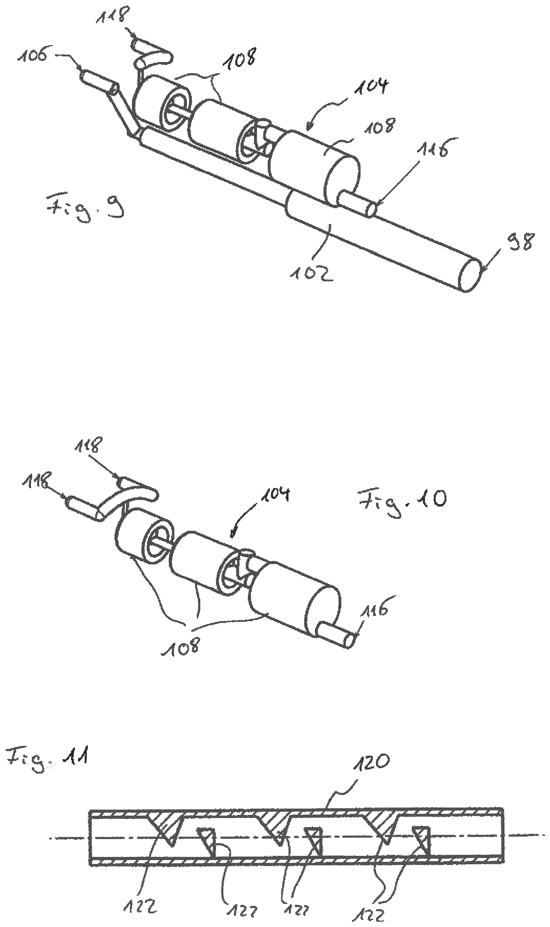

Fig. 9 shows an embodiment example similar to the embodiment example in Fig. 7, with the difference that no valve element 100 is provided, but the fluid channel 104 ends at the second pressure sensing opening 116. Furthermore, the fluid channel 104 ends at its own measuring element receiver 118. Here too, two measuring elements can therefore also be arranged on the measuring element receivers 106 and 118 and an adaption of the sensor can be achieved by way of activation of the respective measuring element, so that the fluid channel 102 or the fluid channel 104 can be selectively used for the pressure transmission. Such a sensor could also be used for differential pressure measurement, by way of the pressure sensing openings 98 and 116 being placed at different locations of an assembly, as has been described above by way of Fig. 2. The measuring element receivers 106 and 118 would then both be used, or, similarly to the first embodiment example, brought into contact with two sides of a differential pressure measuring element, for such a differential pressure measurement.

A fourth possible embodiment example for a fluid channel is shown in Fig. 10. There, the fluid channel corresponds essentially to the fluid channel 104 according to Fig. 9. Here, the fluid channel 104 branches to two measuring element receivers 118 at the end which is away from the pressure sensing opening 116, so that the pressure in the fluid channel 104 can simultaneously act upon two measuring elements, of which for example one measuring element is used for differential pressure measurement and the other for an absolute pressure measurement.

Common to all four embodiment examples according to Fig. 7 to 10 is the fact that apart from differently shaped direction changes, differently shaped expansion spaces 108 can also be applied, wherein these for example can be designed annularly as with the expansion space 82 in Figure 6 or cylindrically as with the expansion space 78 in Fig. 6.

Fig. 11 shows a further geometry of a fluid channel 120 which can be formed by a generative manufacturing method. This fluid channel 120 in its inside comprises projections 122 which effect a meandering course of the free passage of the flow channel 120. A damping of pressure waves or pressure impulses can also be achieved by way of such a channel course.

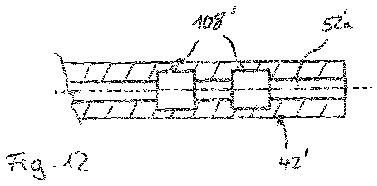

Fig. 12 shows a further embodiment example of a fluid channel, as can be applied in the previously described pressure sensor. Thus Fig. 12 shows a variant of the embodiment of the first fluid channel 52 in the sensor body 34. Fig. 12 shows the first section 42' of a pressure sensor as is shown in section in Fig. 6. In this embodiment example, in contrast to the embodiment in Fig. 6, the channel section 52'a of the first fluid channel 52 comprises two expansion spaces 108'. These spaces each form an additional fluid volume, which is advantageous, in order to prevent cavitation in the region of the measuring element 64 given the occurrence of vacuums. It is to be understood that such channel characteristics which serve for preventing cavitation, in the case of the first fluid channel 52 can also be formed in the second fluid channel 52b. Otherwise, it is to be understood that all described fluid channels with regard to their geometric fashion can be designed in an arbitrary combination of the previously described design possibilities, in order, adapted to the different application purposes, to reduce pressure impulses or water hammers and/or the occurrence of cavitation.

### List of reference numerals

- 2: base housing
- 4: inlet branch
- 6: outlet branch
- 8: impellers
- 10: diffuser
- 12: shaft
- 14: coupling
- 16: drive motor
- 18: inner housing
- 20: outer housing
- 22: channel
- 24: pressure sensor
- 26: opening
- 28: opening
- 30: suction channel
- 32: annular space
- 34: sensor body
- 36: electronics housing
- 38: housing body
- 40: cover
- 42, 42': first section of sensor body
- 44: second section of sensor body
- 46: receiving space
- 48: circuit board
- 50: connection plane
- 52: first fluid channel
- 52a, 52'a: first channel section
- 52b: second channel section
- 54: recess
- 56: first side of circuit board
- 58: second side of circuit board
- 60: interface
- 62: measuring element receiver
- 64: measuring element
- 66: second measuring surface
- 68: first measuring surface
- 70: second fluid channel
- 72: measuring element receiver
- 74, 76: pressure sensing opening
- 78: expansion space
- 80: flushing connection
- 82: expansion space
- 84: free space
- 86: measuring element
- 88: third fluid channel
- 90: measuring element receiver
- 92: opening
- 94: slot
- 96: connection plug
- 98: pressure sensing opening
- 100: valve device
- 102, 104: fluid channels
- 106: measuring element receiver
- 108, 108': expansion spaces
- 110, 112: channel sections
- 114: measuring element receiver
- 116: pressure sensing opening
- 118: measuring element receiver
- 120: fluid channels
- 122: projections
- Y: longitudinal axis of sensor
- X: rotation axis of the pump assembly

## Claims

1. A pressure sensor with a sensor housing, wherein the sensor housing comprises at least one sensor body (34) which is formed from at least two sections (42, 44), both, the first (42) and the second (44) section of the sensor body (34) comprise at least a section of a fluid channel (52) which fluid channel (52) is connected to a pressure measuring element (64),
**characterized in that**
a first section (42) is a premanufactured element, manufactured by way of conventional moulding methods and/or material-removing manufacturing methods onto which a second section (44) is integrally formed as one piece by way of a generative manufacturing method, i.e. 3D printing, such that the second section (44) has been directly printed onto the first section.

2. A pressure sensor according to claim 1, **characterised in that** the pressure sensor is a differential pressure sensor having two pressure sensing openings (74, 76) and a pressure measuring element (64) for detecting the pressure difference between these pressure sensing openings (74, 76).

3. A pressure sensor according to one of the preceding claims, **characterised in that** the first (42) and the second section (44) of the sensor body are manufactured of metal, in particular of stainless steel.

4. A pressure sensor according to one of the preceding claims, **characterised in that** the sensor body is designed for inserting into a space, in whose inside a pressure is to be detected.

5. A pressure sensor according to one of the preceding claims, **characterised in that** the first section (42) extends away from the second section (44) and that a channel section (52a) of a first fluid channel extends through the first section and is open towards an end which is away from the second section (44).

6. A pressure sensor according to one of the preceding claims, **characterised in that** the channel section (52a) of the first fluid channel (52) extends through the second section (44) of the sensor body (34).

7. A pressure sensor according to one of the preceding claims, **characterised in that** a second fluid channel (70) which ends at a first end at a pressure sensing opening (74) is formed in the second section (44) of the sensor body (34).

8. A pressure sensor according to claim 7, **characterised in that** the second fluid channel (70) has an angled or meandering course and/or at least one cross-sectional change (78, 82).

9. A pressure sensor according to claim 7 or 8, **characterised in that** the second fluid channel (70) with a second end ends in the second section (44) of the sensor body (34) at a measuring element receiver (72), on which a measuring element (64) bears.

10. A pressure sensor according to one of the claims 5 to 9, **characterised in that** the channel section (52a) of the first fluid channel (52) ends in the second section (44) of the sensor body (34) at a measuring element receiver, on which a measuring element bears, or at an interface, at which a second channel section (52b) in a further housing part (38) is connected to the first fluid channel (52) in the sensor body (34).

11. A pressure sensor according to claim 10, **characterised in that** the second channel section (52b) of the first fluid channel (52) is formed in a housing body (38) which is connected to the pressure sensor (34).

12. A pressure sensor according to one of the claims 5 to 11, **characterised in that** the first fluid channel (52) ends at a measuring element receiver (62), on which a measuring element (64) bears.

13. A pressure sensor according to claim 12 and claim 9, **characterised in that** the measuring element receiver (62) of the first fluid channel (52) lies opposite the measuring element receiver (72) of the second fluid channel (70) and a differential pressure measuring element (64) is situated on both measuring element receivers (62, 72).

14. A pressure sensor according to one of the preceding claims, **characterised in that** a measuring element (64) is arranged on a circuit board (48) and connected to the at least one first fluid channel (52) which is connected to the measuring element (64), wherein this fluid channel (52), departing from a first side (56) of the circuit board (48), extends through an opening (54) in the circuit board (48) to a second side (58) of the circuit board (48) and is connected to the measuring element (64) at this second side (58) of the circuit board (48).

15. A pump assembly, **characterised in that** a pressure sensor according to one of the preceding claims is arranged in at least one flow path (30, 32) of the pump assembly, for pressure measurement.

16. A method for manufacturing a pressure sensor, according to one of the claims 1 to 15, **characterised in that** a first section (42) compromising at least a section of a fluid channel of a sensor body (34) is provided as a premanufactured component, manufactured by way of conventional moulding methods and/or material-removing manufacturing method and a second section (44) of the sensor body (34) containing at least a section of the fluid channel is subsequently generated directly on the first section (42) by way of a generative manufacturing method, i.e. 3D printing, wherein a connection of the second (44) to the first section (42) occurs.

17. A method according to claim 16, **characterised in that** the premanufactured component which forms the first section (42) is manufactured previously in a primary shaping and/or material-removing manufacturing process.

## Patentansprüche

1. Drucksensor mit einem Sensorgehäuse, wobei das Sensorgehäuse zumindest einen Sensorkörper (34) umfasst, der aus zumindest zwei Teilabschnitten (42, 44) ausgebildet ist, wobei sowohl der erste (42) als auch der zweite (44) Teilabschnitt des Sensorkörpers (34) zumindest einen Teilabschnitt eines Fluidkanals (52) umfassen, wobei der Fluidkanal (52) mit einem Druckmesselement (64) verbunden ist,
**dadurch gekennzeichnet, dass**
ein erster Teilabschnitt (42) ein vorgefertigtes Element ist, das durch herkömmliche Formverfahren und/oder Materialabtragungsherstellungsverfahren hergestellt ist, auf dem ein zweiter Teilabschnitt (44) derart integral als ein Stück durch generative Herstellung, d.h. 3D-Drucken, ausgebildet ist, dass der zweite Teilabschnitt (44) direkt auf den ersten Teilabschnitt gedruckt wurde.

2. Drucksensor nach Anspruch 1, **dadurch gekennzeichnet, dass** der Drucksensor ein Differenzdrucksensor ist, der zwei Druckabfühlöffnungen (74, 76) und ein Druckmesselement (64) zum Erkennen der Druckdifferenz zwischen diesen Druckabfühlöffnungen (74, 76) aufweist.

3. Drucksensor nach einem der vorhergehenden Ansprüche, **dadurch gekennzeichnet, dass** der erste (42) und der zweite (44) Teilabschnitt des Sensorkörpers aus Metall, insbesondere aus Edelstahl, hergestellt sind.

4. Drucksensor nach einem der vorhergehenden Ansprüche, **dadurch gekennzeichnet, dass** der Sensorkörper zum Einführen in einen Raum, in dessen Inneren ein Druck erkannt werden soll, gestaltet ist.

5. Drucksensor nach einem der vorhergehenden Ansprüche, **dadurch gekennzeichnet, dass** der erste Teilabschnitt (42) vom zweiten Teilabschnitt (44) weg verläuft, und dass ein Kanalteilabschnitt (52a) eines ersten Fluidkanals durch den ersten Teilabschnitt verläuft und zu einem Ende hin offen ist, das vom zweiten Teilabschnitt (44) entfernt ist.

6. Drucksensor nach einem der vorhergehenden Ansprüche, **dadurch gekennzeichnet, dass** der Kanalteilabschnitt (52a) des ersten Fluidkanals (52) durch den zweiten Teilabschnitt (44) des Sensorkörpers (34) verläuft.

7. Drucksensor nach einem der vorhergehenden Ansprüche, **dadurch gekennzeichnet, dass** ein zweiter Fluidkanal (70), der an einem ersten Ende an einer Druckabfühlöffnung (74) endet, im zweiten Teilabschnitt (44) des Sensorkörpers (34) ausgebildet ist.

8. Drucksensor nach Anspruch 7, **dadurch gekennzeichnet, dass** der zweite Fluidkanal (70) einen winkligen oder gewundenen Verlauf und/oder zumindest eine Querschnittsänderung (78, 82) aufweist.

9. Drucksensor nach Anspruch 7 oder 8, **dadurch gekennzeichnet, dass** der zweite Fluidkanal (70) mit einem zweiten Ende im zweiten Teilabschnitt (44) des Sensorkörpers (34) an einer Messelementaufnahme (72) endet, auf der ein Messelement (64) gestützt ist.

10. Drucksensor nach einem der Ansprüche 5 bis 9, **dadurch gekennzeichnet, dass** der Kanalteilabschnitt (52a) des ersten Fluidkanals (52) im zweiten Teilabschnitt (44) des Sensorkörpers (34) an einer Messelementaufnahme, auf der ein Messelement gestützt ist, oder an einer Schnittstelle endet, an der ein zweiter Kanalteilabschnitt (52b) in einem weiteren Gehäuseteil (38) mit dem ersten Fluidkanal (52) im Sensorkörper (34) verbunden ist.

11. Drucksensor nach Anspruch 10, **dadurch gekennzeichnet, dass** der zweite Kanalteilabschnitt (52b) des ersten Fluidkanals (52) in einem Gehäusekörper (38) ausgebildet ist, der mit dem Drucksensor (34) verbunden ist.

12. Drucksensor nach einem der Ansprüche 5 bis 11, **dadurch gekennzeichnet, dass** der erste Fluidkanal (52) an einer Messelementaufnahme (62) endet, auf der ein Messelement (64) gestützt ist.

13. Drucksensor nach Anspruch 12 und 9, **dadurch gekennzeichnet, dass** die Messelementaufnahme (62) des ersten Fluidkanals (52) der Messelementaufnahme (72) des zweiten Fluidkanals (70) gegenüberliegt und sich ein Differenzdruckmesselement (64) auf beiden Messelementaufnahmen (62, 72) befindet.

14. Drucksensor nach einem der vorhergehenden Ansprüche, **dadurch gekennzeichnet, dass** ein Messelement (64) auf einer Platine (48) angeordnet und mit zumindest einem ersten Fluidkanal (52) verbunden ist, der mit dem Messelement (64) verbunden ist, wobei dieser Fluidkanal (52) ausgehend von einer ersten Seite (56) der Platine (48) durch eine Öffnung (54) in der Platine (48) zu einer zweiten Seite (58) der Platine (48) verläuft und mit dem Messelement (64) auf dieser zweiten Seite (58) der Platine (48) verbunden ist.

15. Pumpenbaugruppe, **dadurch gekennzeichnet, dass** ein Drucksensor nach einem der vorhergehenden Ansprüche in zumindest einem Strömungsweg (30, 32) der Pumpenbaugruppe zur Druckmessung angeordnet ist.

16. Verfahren zum Herstellen eines Drucksensors nach einem der Ansprüche 1 bis 15, **dadurch gekennzeichnet, dass** ein erster Teilabschnitt (42), der zumindest einen Teilabschnitt eines Fluidkanals eines Sensorkörpers (34) umfasst, als eine vorgefertigte Komponente vorgesehen wird, die durch herkömmliche Formverfahren und/oder ein Materialabtragungsherstellungsverfahren hergestellt wird, und ein zweiter Teilabschnitt (44) des Sensorkörpers (34), der zumindest einen Teilabschnitt des Fluidkanals enthält, anschließend durch ein generatives Herstellungsverfahren, d.h. 3D-Drucken, direkt auf dem ersten Teilabschnitt (42) erzeugt wird, wobei eine Verbindung des zweiten (44) mit dem ersten Teilabschnitt (42) erfolgt.

17. Verfahren nach Anspruch 16, **dadurch gekennzeichnet, dass** die vorgefertigte Komponente, die den ersten Teilabschnitt (42) ausbildet, vorher in einem primären Formgebungs- und/oder Materialabtragungsherstellungsprozess hergestellt wird.

## Revendications

1. Capteur de pression avec un boîtier de capteur, dans lequel le boîtier de capteur comprend au moins un corps de capteur (34) qui est formé d'au moins deux sections (42, 44), la première section (42) et la seconde section (44) du corps de capteur (34) comprennent toutes deux au moins une section d'un canal de fluide (52), lequel canal de fluide (52) est relié à un élément de mesure de pression (64),
**caractérisé en ce que**
une première section (42) est un élément préfabriqué, fabriqué au moyen de procédés de moulage classiques et/ou de procédés de fabrication par enlèvement de matière, sur lequel une seconde section (44) est formée d'un seul tenant au moyen d'un procédé de fabrication générative, à savoir une impression 3D, de sorte que la seconde section (44) a été directement imprimée sur la première section.

2. Capteur de pression selon la revendication 1, **caractérisé en ce que** le capteur de pression est un capteur de pression différentielle présentant deux ouvertures de détection de pression (74, 76) et un élément de mesure de pression (64) pour détecter la différence de pression entre ces ouvertures de détection de pression (74, 76).

3. Capteur de pression selon l'une des revendications précédentes, **caractérisé en ce que** la première (42) et la seconde section (44) du corps de capteur sont fabriquées en métal, en particulier en acier inoxydable.

4. Capteur de pression selon l'une des revendications précédentes, **caractérisé en ce que** le corps de capteur est conçu pour être inséré dans un espace dans lequel une pression doit être détectée.

5. Capteur de pression selon l'une des revendications précédentes, **caractérisé en ce que** la première section (42) s'étend à l'opposé de la seconde section (44) et **en ce qu'**une section de canal (52a) d'un premier canal de fluide s'étend à travers la première section et est ouverte vers une extrémité qui est à l'opposé de la seconde section (44).

6. Capteur de pression selon l'une des revendications précédentes, **caractérisé en ce que** la section de canal (52a) du premier canal de fluide (52) s'étend à travers la seconde section (44) du corps de capteur (34).

7. Capteur de pression selon l'une des revendications précédentes, **caractérisé en ce qu'**un second canal de fluide (70) qui se termine à une première extrémité au niveau d'une ouverture de détection de pression (74) est formé dans la seconde section (44) du corps de capteur (34).

8. Capteur de pression selon la revendication 7, **caractérisé en ce que** le second canal de fluide (70) présente un tracé incliné ou sinueux et/ou au moins un changement de section transversale (78, 82).

9. Capteur de pression selon la revendication 7 ou 8, **caractérisé en ce que** le second canal de fluide (70) avec une seconde extrémité se termine dans la seconde section (44) du corps de capteur (34) au niveau d'un récepteur d'élément de mesure (72), sur lequel un élément de mesure (64) prend appui.

10. Capteur de pression selon l'une des revendications 5 à 9, **caractérisé en ce que** la section de canal (52a) du premier canal de fluide (52) se termine dans la seconde section (44) du corps de capteur (34) au niveau d'un récepteur d'élément de mesure, sur lequel un élément de mesure prend appui, ou au niveau d'une interface, au niveau de laquelle une seconde section de canal (52b) dans une partie de boîtier supplémentaire (38) est reliée au premier canal de fluide (52) dans le corps de capteur (34).

11. Capteur de pression selon la revendication 10, **caractérisé en ce que** la seconde section de canal (52b) du premier canal de fluide (52) est formée dans un corps de boîtier (38) qui est relié au capteur de pression (34).

12. Capteur de pression selon l'une des revendications 5 à 11, **caractérisé en ce que** le premier canal de fluide (52) se termine au niveau d'un récepteur d'élément de mesure (62), sur lequel un élément de mesure (64) prend appui.

13. Capteur de pression selon la revendication 12 et la revendication 9, **caractérisé en ce que** le récepteur d'élément de mesure (62) du premier canal de fluide (52) est situé en face du récepteur d'élément de mesure (72) du second canal de fluide (70) et un élément de mesure de pression différentielle (64) est situé sur les deux récepteurs d'élément de mesure (62, 72).

14. Capteur de pression selon l'une des revendications précédentes, **caractérisé en ce qu'**un élément de mesure (64) est agencé sur une carte de circuit imprimé (48) et est relié au au moins un premier canal de fluide (52) qui est relié à l'élément de mesure (64), ce canal de fluide (52), en partant d'un premier côté (56) de la carte de circuit imprimé (48), s'étendant à travers une ouverture (54) de la carte de circuit imprimé (48) vers un second côté (58) de la carte de circuit imprimé (48) et étant relié à l'élément de mesure (64) au niveau de ce second côté (58) de la carte de circuit imprimé (48).

15. Ensemble de pompe, **caractérisé en ce qu'**un capteur de pression selon l'une des revendications précédentes est agencé dans au moins un trajet d'écoulement (30, 32) de l'ensemble de pompe, pour une mesure de pression.

16. Procédé de fabrication d'un capteur de pression selon l'une des revendications 1 à 15, **caractérisé en ce qu'**une première section (42) comprenant au moins une section d'un canal de fluide d'un corps de capteur (34) est prévue sous la forme d'un composant préfabriqué, fabriqué par des procédés de moulage classiques et/ou un procédé de fabrication par enlèvement de matière, et une seconde section (44) du corps de capteur (34) contenant au moins une section du canal de fluide est ensuite générée directement sur la première section (42) par un procédé de fabrication générative, à savoir une impression 3D, dans lequel une liaison de la seconde (44) à la première section (42) étant réalisée.

17. Procédé selon la revendication 16, **caractérisé en ce que** le composant préfabriqué qui forme la première section (42) est fabriqué au préalable dans un processus de formage primaire et/ou de fabrication par enlèvement de matière.
